# EUROPÄISCHE PATENTSCHRIFT

(11) **EP 3 083 136 B1**
(45) Veröffentlichungstag und Bekanntmachung des Hinweises auf die Patenterteilung: **30.05.2018**
(21) Anmeldenummer: 14816210.0
(22) Anmeldetag: 15.12.2014
(51) Int. Cl.: B23Q 11/00, B01D 36/00, B08B 15/04

(54) **ABSAUGVORRICHTUNG UND WERKZEUGMASCHINE**
EXHAUST DEVICE AND MACHINE TOOL
DISPOSITIF D'ASPIRATION ET MACHINE-OUTIL

(30) Priorität: 17.12.2013 DE 102013020820
(43) Veröffentlichungstag der Anmeldung: 26.10.2016
(73) Patentinhaber: Schuko Heinz Schulte-Südhoff GmbH & Co. KG, 88348 Bad Saulgau (DE)
(72) Erfinder: GEBHARDT, Andreas, 71522 Backnang (DE); MATEI, Daniel Ion, R-900647 Constanta (RO); SCHULTE-SÜDHOFF, Andre, 49196 Bad Laer (DE)
(74) Vertreter: Otten, Roth, Dobler & Partner mbB Patentanwälte
(86) Internationale Anmeldenummer: PCT/EP2014/077734
(87) Internationale Veröffentlichungsnummer: WO 2015/091341

(56) Entgegenhaltungen:
- DE-A1- 19 651 662
- US-A- 4 201 256

## Beschreibung

Die Erfindung betrifft eine Absaugvorrichtung zur Absaugung von Partikeln wie Spänen beziehungsweise Stäuben aus dem Bearbeitungsbereich bei der Zerspanung oder bei der Trockenbearbeitung nach dem Oberbegriff des Anspruchs 1, eine Werkzeugmaschine nach dem Oberbegriff des Anspruchs 13 sowie ein Verfahren zum Absaugen von Partikeln nach dem Oberbegriff des Anspruchs 16.
Aus dem Stand der Technik ist bekannt, Späne, etwa bei der Holz- oder Verbundwerkstoffverarbeitung sowie bei der Trockenbearbeitung von metallischen Werkstoffen abzusaugen. Dabei werden hauptsächlich raum- und bodennahe Absauganlagen eingesetzt. Aus der DE 60 2005 004 058 T2 ist beispielsweise eine Staubabzugshaube für Werkzeugmaschinen bekannt, welche in der Nähe des Bearbeitungsbereichs eingesetzt wird. Die abgesaugte, verunreinigte Luft muss herkömmlicherweise von den Partikeln gereinigt werden, bevor sie an die Umwelt abgegeben wird. Darüber hinaus ist es aus dem Stand der Technik bekannt, Lüfter einzusetzen, die innerhalb einer Bearbeitungskabine dafür sorgen, dass Luftströmungen eine Vorzugsrichtung besitzen und bei der Bearbeitung anfallende Partikel tendenziell sich nicht an ungewollten Stellen, beispielsweise auf dem zu bearbeitenden Werkstück ablagern, sondern auf den Boden fallen. Eine Absaugvorrichtung nach dem Oberbegriff des beigefügten Anspruchs 1 ist aus der DE 196 51 662 A1 bekannt. Aufgabe der Erfindung ist es, eine Absaugvorrichtung beziehungsweise eine Werkzeugmaschine sowie ein Verfahren zum Absaugen zur Verfügung zustellen, die eine Energieeinsparung ermöglichen.

Die Aufgabe wird, ausgehend von einer Absaugvorrichtung und einer Werkzeugmaschine durch die kennzeichnenden Merkmale der Ansprüche 1 und 10 gelöst. Durch die in den abhängigen Ansprüchen genannten Maßnahmen sind vorteilhafte Ausführungen und Weiterbildung der Erfindung möglich.
Dementsprechend dient die erfindungsgemäße Absaugvorrichtung zur Absaugung von Partikeln wie Spänen beziehungsweise Stäuben aus dem Bearbeitungsbereich bei der Zerspanung von Holz-, Faser- oder Verbundwerkstoffen oder von Kunststoff sowie gegebenenfalls bei der Trockenbearbeitung von metallischen Werkstoffen.
Die erfindungsgemäße Absaugvorrichtung umfasst einen Absaugkanal zur Abführung von Luft zusammen mit dem abzusaugenden Spänen beziehungsweise Stäuben aus dem Bearbeitungsbereich. Sie zeichnet sich dadurch aus, dass ein Zuführkanal zur Zuführung von Luft in den Bearbeitungsbereich vorgesehen ist, wobei der Absaugkanal und der Zuführkanal miteinander gekoppelt sind, sodass wenigstens ein Teil der über den Absaugkanal abgesaugten Luft in den Zuführkanal zur Rückführung der Luft in den Bearbeitungsbereich geleitet wird. Ferner ist der Zuführkanal dazu ausgebildet, ein Werkzeug beziehungsweise Werkstück im Bearbeitungsbereich unmittelbar anzustrahlen. Zum Anstrahlen des bearbeitenden Werkzeugs beziehungsweise des zu bearbeitenden Werkstücks wird demnach Prozessluft verwendet, die zuvor über den Absaugkanal abgesaugt wurde. Diese Prozessluft stammt sodann aus dem Bearbeitungsbereich und ist regelmäßig mit Partikel aus der Bearbeitung angereichert.

Durch das gezielte Anstrahlen des Werkzeugs oder Werkstücks mit Prozessluft kann verhindert werden, dass sich die bei der Bearbeitung entstehenden Partikel an ungewollten Stellen ablagern und somit zu Verunreinigungen des bearbeitenden Werkstücks führen oder sogar während des Bearbeitungsprozesses diesen behindern. Dadurch also, dass in vorteilhafter Weise eine Luftzuführung zum Anstrahlen des Werkzeugs beziehungsweise Werkstücks und eine Absaugung der Prozessluft aus dem Bearbeitungsbereich vorgenommen werden, wobei das Werkzeug oder das Werkstück unmittelbar angestrahlt wird, kann eine effektive Beseitigung der Partikel im Bearbeitungsbereich erfolgen. Die Qualität des Bearbeitungsprozesses kann dadurch sehr deutlich erhöht werden. Zudem kann auch die Anstrahlung des Werkstücks oder Werkzeugs grundsätzlich zur Kühlung bei Bearbeitungsprozess beitragen.

Die Maßnahme, dass Absaugkanal und Zuführkanal miteinander gekoppelt sind, wodurch wenigstens ein Teil der abgesaugten Luft sodann zur unmittelbaren Anstrahlung des Werkzeugs oder des Werkstücks verwendet wird, kann ein deutlicher Beitrag zur Energieeinsparung erfolgen. Die ohnehin abzusaugende Prozessluft wird noch einmal zum Anstrahlen im Bearbeitungsbereich selbst verwendet. Eine gesonderte Druckluftversorgung zum Anstrahlen im Bearbeitungsbereich ist also grundsätzlich nicht notwendig.

Zudem ist zu beachten, dass für die zum Anstrahlen eines Werkzeugs oder Werkstücks verwendete Luft keine derart hohen Anforderungen bestehen, wie sie für die Atemluft außerhalb des Bearbeitungsbereiches angesetzt werden. Es ist daher nicht t notwendig, die zum Anstrahlen im Bearbeitungsbereich verwendete Prozessluft derart zu filtern und aufzubereiten, dass sie der Reinheit von Atemluft außerhalb des Bearbeitungsbereichs gleichkommt.

Ferner wird ermöglicht, dass die Prozessluft in einem Kreislauf geführt wird, der im Wesentlichen geschlossen ausgebildet ist und die in der Luft befindlichen Partikel, die aus dem Bearbeitungsprozess stammen, nicht mit einer Bedienperson über die Atemluft in Kontakt treten.
Die Art der bei der Bearbeitung anfallenden Partikel hängt unter anderem vom Bearbeitungsprozess selbst ab. Um in vorteilhafter Weise sicherzustellen, dass die zum Anstrahlen verwendete Prozessluft nicht etwa aufgrund hoher Staubkonzentration die untere Explosionsgrenze überschreitet, ist ein Vorseparator zur Filterung, insbesondere zur Grobfilterung vorgesehen. Dieser Vorseparator filtert die über den Absaugkanal abgesaugt Luft. Durch die Verwendung eines derartigen Vorseparators kann zudem sichergestellt werden, dass der Bearbeitungsprozess selbst durch die in der Luft enthaltenen Partikel beim Anstrahlen nicht beeinträchtigt wird. Zum Beispiel könnten andernfalls grobe Partikel, die beim Anstrahlen des Werkzeugs oder Werkstücks mit Druck hohe Geschwindigkeiten aufnehmen können, einen Abtrieb verursachen und somit Werkzeug oder Werkstück beschädigen. Regelmäßig ist in vorteilhafterweise nur eine Grobfilterung notwendig, weil die zum Anstrahlen verwendete Prozessluft nicht den Reinheitsgrad wie zum Beispiel Atemluft aufweisen muss.
Zum einen können dadurch Kosten eingespart werden, da eine Anlage zur Grobfilterung regelmäßig weniger kostenintensiv als eine Feinfilteranlage ist. Insbesondere kann jedoch noch einmal eine Reduzierung des Energiebedarfs erzielt werden, weil eine Anlage zur Grobfilterung in der Regel einen deutlich geringeren Luftwiderstand als eine Feinfilterungsanlage besitzt. Es können daher in der Regel auch niedriger dimensionierte Gebläse beziehungsweise Lüfter verwendet werden, die weniger Kosten aufwendig bezogen werden und arbeiten können.
Je nach Art der Bearbeitung kann der Vorseparator beispielsweise als Fliegkraftabscheider, als Schwerkraftabscheider oder als Entstauber ausgebildet sein. Über Fliegkraftabscheider und Schwerkraftabscheider können insbesondere grobe, massenreiche Partikel ausgesondert werden. Ein Entstauber ist insbesondere dann vorteilhaft, wenn etwa tatsächlich feinere Partikel herausgefiltert werden müssen, da ansonsten zum Beispiel die untere Explosionsgrenze überschritten werden kann.
Um bei einem Ausführungsbeispiel der Erfindung eine flexiblere Handhabung der Absaugvorrichtung zu ermöglichen, umfasst der Absaugkanal eine Verzweigung, die in wenigstens zwei parallel geschaltete Separationskanäle abzweigt. Es können also optionale Wege zur Führung der Prozessluft geschaffen werden. Durch diese Maßnahme wird insbesondere ermöglicht, dass die abgesaugte Prozessluft in unterschiedlichster Weise behandelt werden kann. Beispielsweise kann wenigstens einer der Separationskanäle wenigstens einen Vorseparator zur Grobfilterung der über den Absaugkanal abgesaugten Luft umfassen. Sind zum Beispiel in den parallel geschalteten Separationskanälen unterschiedliche Arten von Vorseparatoren oder sogar (in wenigstens einem Kanal) überhaupt kein Vorseparator vorgesehen, so können vorteilhafterweise verschiedene Partikelgrößen herausgefiltert werden. Die Absaugvorrichtung gemäß diesem Ausführungsbeispiel kann also unterschiedlichen Bearbeitungsprozessen, beispielsweise an unterschiedlichen Werkstücken, Rechnung tragen.
Werden bei der Bearbeitung eines Werkstücks Stäube freigesetzt, so kann in vorteilhafterweise mittels einer Weiche eine Umschaltung zwischen den Separationskanälen bei einer Weiterbildung der Erfindung vorgesehen sein, sodass die Stäube dann in einen Separationskanal über einen Entstauber herausgefiltert werden. Fallen bei der Bearbeitung wiederum hauptsächlich grobe Späne an, so können diese zum Beispiel über einen Schwerkraftabscheider als Vorseparator herausgefiltert werden. Zu diesem Zweck kann auf einen entsprechenden Separationskanal mit passendem Vorseparator umgeschaltet werden.

Darüber hinaus wird über einen Abzweigkanal einen Teil der abgesaugten Prozessluft abgeführt, um dieser über eine Feinfiltervorrichtung eine Feinfilterung durchlaufen zu lassen. Beispielsweise können 5% bis 10% mehr Luft abgesaugt als zur Anstrahlung eingeblasen werden. Der eigentliche Kreislauf, der die Rückführung der abgesaugten Prozessluft umfasst, bewegt dadurch etwa 90% bis 95% der abgesaugten Luft. Hierdurch kann in vorteilhafterweise sichergestellt werden, dass die vorgereinigte Prozessluft wieder vollständig erfasst wird, sodass grob gereinigte Prozessluft nicht als Atemluft freigesetzt wird. Um diese Differenz zwischen der zum Anstrahlen verwendeten Luft und der abgesaugten Luft herzustellen, ist die Abzweigung, die zur Feinfilteranlage führt, vorgesehen. Ein Teil der verunreinigten Prozessluft wird also fein gefiltert und kann anschließend an die Umwelt abgegeben werden.
Regelmäßig unterliegt die dem Kreislauf geführte Prozessluft vor allem der Bestimmung, dass die untere Explosionsgrenze nicht überschritten wird. Es können zudem noch Vorschriften bestehen, ob die fein gefilterte Luft in einer Fertigungshalle an die Atemluft abgegeben werden kann oder ob diese außerhalb der Halle in die Umwelt geleitet werden muss. Grundsätzlich werden jedoch beide Möglichkeiten bei der erfindungsgemäßen Absaugvorrichtung beziehungsweise bei einer Ausführungsform der Erfindung ermöglicht.

Der Abzweigkanal ist dem Vorseparator nachgeschaltet, so dass die der Feinfiltervorrichtung zugeführte Luft bereits in einer ersten Filterstufe im Sinne einer Grobfilterung vorgefiltert wird. Zuführkanal und Absaugkanal können grundsätzlich je nach Art des Bearbeitungsprozesses in verschiedener Weise ausgebildet oder angeordnet sein. Bei einer Ausführungsform der Erfindung ist der Absaugkanal als Absaughaube ausgebildet. Eine Absaughaube besitzt in der Regel den Vorteil, dass sie zumindest eine teilweise Kapselung des Bearbeitungsbereichs ermöglicht, wodurch in vorteilhafterweise ein Großteil der bei der Bearbeitung anfallenden Partikel vom Absaugstrom erfasst und abgeführt wird. Zudem erlaubt eine Absaughaube in der Regel eine definierte Abführung der mit Partikel angereicherten Luft, die vom zu bearbeitenden Werkstück weg erfolgt. D.h. der Kontakt zwischen Partikel und Werkstück kann deutlich reduziert werden. Somit wird auch die Anlagerung von Partikeln am Werkstück oder der Abrieb am Werkstück deutlich reduziert. Die Absaughaube kann den Bearbeitungsbereich (mit Ausnahme des an das Werkstück angrenzenden Bereichs) fast vollständig umschließen. Gerade dann, wenn die Absaughaube den Bearbeitungsbereich möglichst umfassend abgrenzen soll, kann in vorteilhafterweise der Zuführkanal in der Absaughaube integriert sein. Absaug- und Zuführbereich bilden sodann eine weitgehend abgeschlossene Einheit, sodass die entstehenden Partikel kaum aus diesem Bereich herausgelangen können und zu einem sehr großen Teil abgesaugt können.

Gerade dann, wenn die Absaugvorrichtung beispielsweise im Zusammenhang mit einer CNC-Maschine eingesetzt wird, die über einen Werkzeugwechsler zum Wechseln der Bearbeitungswerkzeuge verfügt, kann eine voll umschließende Absaughaube beim Werkzeugwechsel auch störend wirken. In diesen Fall kann es erwünscht sein, den Absaugkanal in einen Absaugstutzen und den Zuführkanal entsprechend in ein Zuluftstutzen zu integrieren. Insbesondere können Absaugstutzen und/oder Zuluftstutzen flexibel positionierbar ausgebildet sein, beispielsweise über Gelenke an den jeweiligen Leitungskanälen.

Außerdem kann bei einer Ausführungsform der Erfindung eine Strömungsvorrichtung zur Erzeugung des Luftstroms vorgesehen sein, insbesondere zur Erzeugung von Druckluft. Grundsätzlich kann ein Gebläse verwendet werdem, mit dem die Luft angesaugt und schließlich zum Anstrahlen zugeführt wird. Eine Verengung des Zuführkanals kann dazu genutzt werden, dass die Strömungsgeschwindigkeit der Anstrahlluft sich erhöht und somit eine größere Druckwirkung beim Anstrahlen erzielt wird. Denkbar ist aber auch, dass eine zusätzliche Gebläsevorrichtung vorgesehen ist, mit der die Druckwirkung beim Anstrahlen noch einmal erhöht wird.
Dementsprechend zeichnet sich eine erfindungsgemäße Werkzeugmaschine zur Bearbeitung eines Werkstücks mit einem Bearbeitungsbereichs zur Lagerung beziehungsweise Bearbeitung des Werkstücks dadurch aus, dass eine erfindungsgemäße Absaugvorrichtung beziehungsweise ein Ausführungsbeispiel der Erfindung vorhanden ist. Der Bearbeitungsbereich ist sodann der Bereich, in dem das Werkstück gelagert beziehungsweise bearbeitet wird. Es ist denkbar, dass der Bereich der Lagerung des Werkstücks deutlich größer ist als zum Beispiel der Bearbeitungsbereich im Zusammenhang mit der vorgeschlagenen Absaugvorrichtung ist insbesondere von Bedeutung, in welchem Bereich die bei der Bearbeitung entstehenden Partikel gelangen und zweckmäßig abgesaugt werden.
Bei einer erfindungsgemäßen Werkzeugmaschine können dementsprechend die Vorteile der Absaugvorrichtung gemäß der Erfindung genutzt werden.
Bei einer vorteilhaften Weiterbildung der Erfindung kann der Absaugkanal intern in das Werkzeug einer Werkzeugmaschine integriert sein. Die Absaugung erfolgt dann direkt am Ort, wo die Bearbeitung des Werkstücks tatsächlich vorgenommen wird und wo sodann auf die Partikel entstehen. Dadurch kann die Wirkung reduziert werden, dass sich die Partikel in der Umgebungsluft im Bearbeitungsbereich ausbreiten; sie werden also direkt nach ihrer Entstehung abgeführt. Diese Maßnahme ermöglicht einen ähnlichen Effekt, nämlich eine Absaugung mit gesteigerter Effektivität, wobei in vorteilhafter Weise die entstehenden Partikel weniger im Raum gestreut werden.

### Ausführungsbeispiele

Ausführungsbeispiele der Erfindung sind in den Zeichnungen dargestellt und werden nachstehend unter Angabe weiterer Einzelheiten und Vorteile näher erläutert.
Im Einzelnen zeigen:
- Figur 1: eine schematische Darstellung einer Absaugvorrichtung für eine Werkzeugmaschine gemäß der Erfindung;
- Figur 2: eine schematische Darstellung einer Absaugvorrichtung für eine Werkzeugmaschine gemäß der Erfindung mit Separationskanälen;
- Figur 3: eine schematische Darstellung eines Bearbeitungsbereichs mit Zuführ- und Abführkanal, jeweils mit Gelenken, gemäß der Erfindung;
- Figur 4: eine schematische Darstellung eines Bearbeitungsbereichs mit einer Absaughaube, gemäß der Erfindung, sowie
- Figur 5: eine schematische Darstellung eines Bearbeitungsbereichs mit einem Zuführ- und Abführrohr, gemäß der Erfindung.

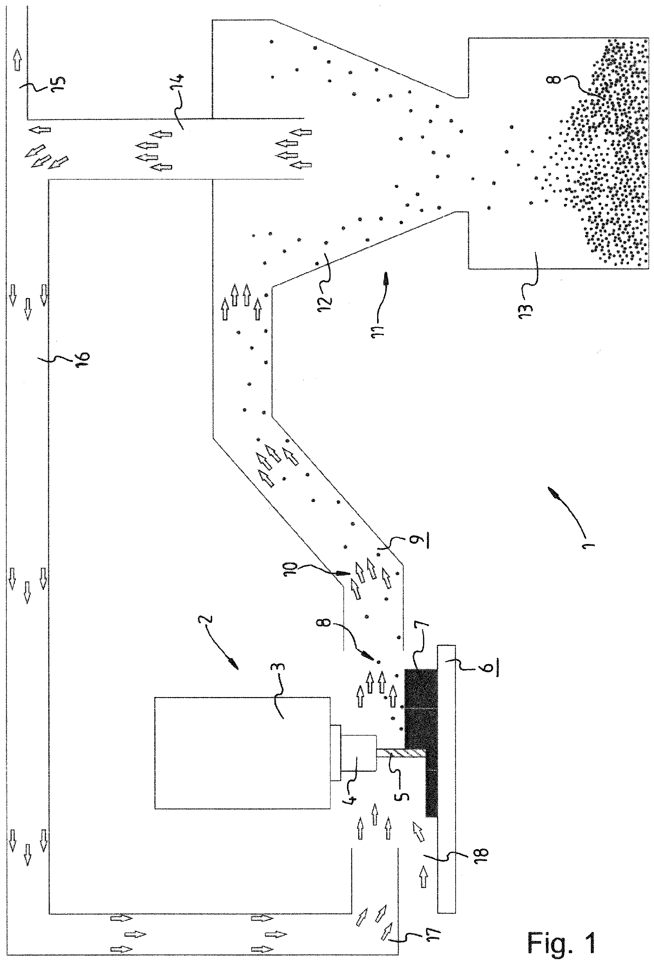

Figur 1 zeigt eine schematische Darstellung einer Absaugvorrichtung 1 im Zusammenhang mit einer Werkzeugmaschine 2. Die Werkzeugmaschine 2 umfasst eine Antriebsspindel 3 (in einem Gehäuse) zum Antrieb eines Werkzeugs, hier eines im Futter 4 eingespannten Fräsers 5. Auf einem Werkstücktisch 6 ist ein zu bearbeitendes Werkstück 7 eingespannt. Beim Bearbeitungsvorgang, hier beim Fräsen, erzeugt der Fräser 5 Partikel 8, insbesondere Späne. Im Bearbeitungsbereich, in der Nähe des Werkstücks 7 befindet sich entsprechend ein Absaugkanal 9. Der Absaugkanal verfügt über eine in Figur 1 nicht weiter dargestellte Gebläsevorrichtung. Aus dem Bearbeitungsbereich, unmittelbar in der Nähe des Bearbeitungswerkzeugs 5 und des Werkstücks 7 wird Luft eingesaugt, die entsprechend auch die angefallenen Partikel 8 enthält. Die Richtung des Luftstroms ist über die Pfeile 10 angedeutet. Luft, einschließlich der Partikel 8 wird über den Absaugkanal weitertransportiert und gelangt in einen Vorseparator 11.

Bei dem Vorseparator 11 handelt es sich um einen Schwerkraftabscheider. Der Luftstrom mit den Partikeln gelangt in einen Trichter 12 und wird im Wesentlichen an dessen Seitenwänden entlang nach unten geführt. Der Trichter 12 mündet in einen Behälter 13, welcher dicht mit dem Trichter 12 abschließt. Der Luftstrom wird also im Wesentlichen über die Trichtermündung und den Behälter 13 hinweggeführt, sodass die Partikel 8 aus dem Strom heraustreten und in Folge der Schwerkraft nach unten in den Behälter 13 fallen. Im oberen Bereich des Trichters 12 wird die Leitung über ein Rohr 14 weitergeführt. Die Leitung 14 besitzt schließlich eine Abzweigung 15, und der Hauptstrom wird über die Leitung 16 weitergeführt, sodass die Luft schließlich in den Zuführkanal 17 geleitet wird, mit dem der Fräser 5 angestrahlt wird. Die Luft wird also aus dem Kanal 14 teilweise in den Kanal 16 beziehungsweise 17 geleitet. Die restliche Luft gelangt in die Abzweigung 15, die schließlich weiter in eine Feinfiltervorrichtung führt (in Figur 1 nicht weiter dargestellt). Der über den Kanal 15 abgezweigte Strom umfasst ca. 5% bis 10% des gesamten abgesaugten Luftstroms, der über den Kanal 9 abgezogen wird. Die übrigen 90% bis 95% der Luft werden über den Kanal 16 unter Druck in den Bearbeitungsbereich eingeblasen. Das Werkstück 7 bzw. das Werkzeug 5 werden unmittelbar mit der Luft angestrahlt.

Über den Absaugkanal 9 wird zum Teil auch Umgebungsluft mit angesaugt, die nicht unmittelbar aus dem Zuführkanal 17 stammt. Es handelt sich dabei um die Luft 18 aus der näheren Umgebung im Bearbeitungsbereich.

Diese Absaugvorrichtung 1 ermöglicht eine wesentlich höhere Erfassungsrate der Partikel 8, als dies sonst bei herkömmlichen Maschinen möglich ist, insbesondere bietet die Absaugvorrichtung gemäß der Erfindung die Möglichkeit der Energieeinsparung gegenüber herkömmlichen Absaugvorrichtungen. Um Erfassungsraten der bei der Bearbeitung entstandenen Stäube erhöhen zu können, wurden im Stand der Technik bislang unter anderem zum Beispiel Blasventilatoren oder Druckluftlanzen eingesetzt, welche die Partikel aufwirbeln können; diese herkömmlichen Maßnahmen besitzen jedoch den Nachteil, dass sie sehr energieaufwendig arbeiten.

Der Kreislauf aus abgesaugter und rückgeführter Luft, die zur Anstrahlung im Bearbeitungsbereich verwendet wird, ist geschlossen ausgebildet. Auch dann, wenn strenge Vorschriften bestehen, dass gefilterte bzw. fein gefilterte Luft nicht als Atemluft in der Produktionshalle eingesetzt werden kann, kann eine entsprechende Absaugvorrichtung gemäß der Erfindung immer noch verwendet werden, zumal die zur Feinfiltration abgezweigte Luft nach außen geführt werden kann, während der überwiegende Rest von mindestens 95% in einen geschlossenen Kreislauf eingebunden ist und nicht als Atemluft verwendet wird.

Die Absaugung einer größeren Luftmenge als die tatsächlich zurückgeführte Luftmenge, die zur Anstrahlung verwendet wird, ist deshalb notwendig, weil beim Absaugen zwangsläufig auch Umgebungsluft mit eingesaugt wird. Es wird in der Regel also nicht nur die Luft eingesaugt werden können, die zur Anstrahlung selbst verwendet wird. Besonders vorteilhaft ist an einer Absaugvorrichtung gemäß der Erfindung, dass nur die Luft verunreinigt wird, die für den Absaugprozess benötigt wird. Es müssen demnach wesentlich geringere Luftmengen endgefiltert werden (ca. 5% bis 10% der Absaugluft).

Die Absaugung ist dadurch deutlich effizienter, da zudem auch die Anstrahlung wesentlich kraftvoller ist. Besonders vorteilhaft ist die erfindungsgemäße Absaugvorrichtung, weil, wie bereits dargestellt, geringere Mengen an Luft fein gefiltert werden müssen. Zum einen ergibt sich dadurch ein wesentlich geringerer Eigenwiderstand der Leitung, in der die Filtervorrichtung angeordnet ist. Zum anderen besitzt eine Leitung mit Vorseparator einen deutlich geringeren Luftwiderstand als eine Leitung, in der eine Feinfilteranlage angeordnet ist. Somit wird entsprechend auch der Energiebedarf gesenkt. Insgesamt kann erreicht werden, dass wesentlich weniger Frischluft verunreinigt wird, da einerseits weniger Luft abgesaugt wird und andererseits ohnehin der größte Teil der verwendeten Luft als Prozessluft in einen Kreislauf eingebettet ist.

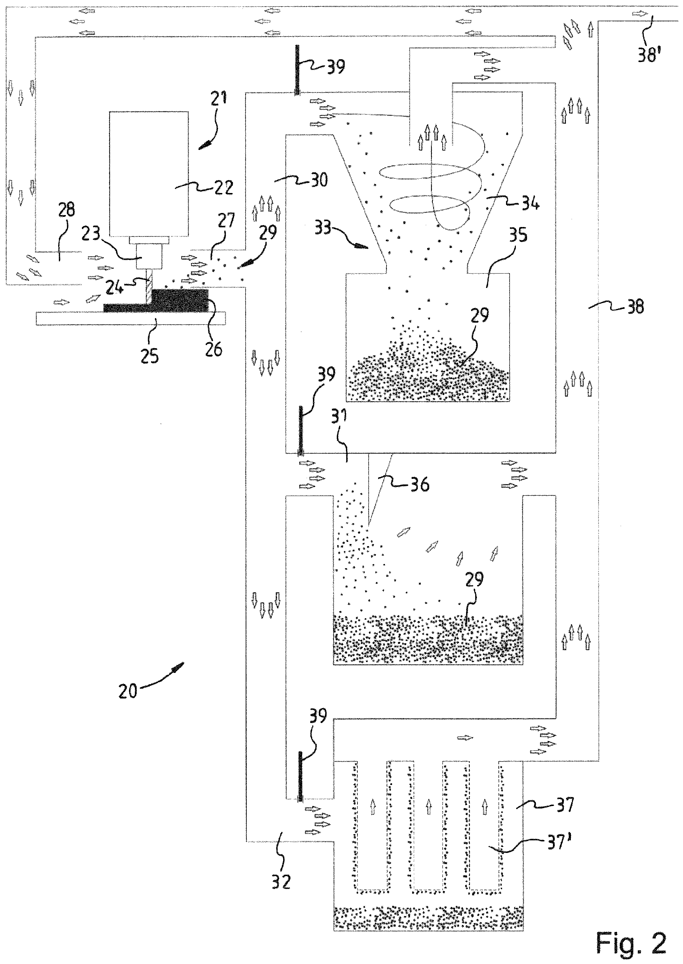

Figur 2 zeigt eine Absaugvorrichtung 20 mit einer Werkzeugmaschine 21, mit einem Spindelgehäuse 22, einem Futter 23 und einen Fräser 24. Auf einem Werkstücktisch 25 ist ein Werkstück 26 gehaltert, dass vom Fräser 24 bearbeitet wird. Des Weiteren umfasst die Vorrichtung eine Absaugleitung 27 und eine Zuführleitung 28. Im Bearbeitungsbereich werden das Werkzeug 24 beziehungsweise das Werkstück 26 an der entsprechenden Stelle unmittelbar mit Luft aus dem Zuführkanal 28 angestrahlt. Die Luft, zuzüglich eines geringen Anteils an Luft aus der Umgebung des Bearbeitungsbereichs, wird über den Kanal 27 abgesaugt. Gleichzeitig mit der Luft werden bei der Bearbeitung entstandene Partikel 29 eingesaugt.

Im Unterschied zur Figur 1 verzweigt sich der Absaugkanal 27 in Figur 2 in mehrere Einzelabzweigungen 30, 31 und 32. Abzweigung 30 führt zu einem Schwerkraftvorseparator 33, der ebenfalls einen Trichter 34 und einen daran angeschlossenen Behälter 35 aufweist. Bei dem Vorseparator 33 handelt es sich um einen Schwerkraftseparator. Die Partikel 29 können der Bewegung, welche die beschleunigte Luftmasse durch den Trichter 34 durchführt, nicht folgen und fallen somit in den Behälter 35.

Die Abzweigung 31 führt zu einem weiteren Separator, bei dem ebenfalls eine Barriere verwendet wird, auf welche die eintreffenden Luftströme prallen. Auf diese Weise können sich Partikel einfacher im Behälter ablagern, da diese gegen die Barriere 36 prallen, die Partikel sodann an Geschwindigkeit verlieren und schließlich über einen Schwerkraftabscheider abgesondert werden. Die Luft wird ohne die abgeschiedenen Partikel weitertransportiert, während sich die Partikel 29 auf dem Boden des Behälters 35 ablagern.

Die weitere Abzweigung 32 führt als Vorseparator zu einer fingerartigen Filterstruktur 37', die in einem Behälter 37 angeordnet ist. Dieser Vorseparator 37 ist als Entstauber ausgebildet. Die angesaugte Luft prallt dort zunächst auf eine Wand, wird weitergeleitet, bis sie schließlich in den Kanal gelangt, der innerhalb der Absaugvorrichtung oder Werkzeugmaschine weitergeführt wird. Über den entsprechenden Kanal 38 gelangt der überwiegende Teil der Luft mit den entsprechenden Partikeln wieder zurück in den Zuführkanal und wird zur Anstrahlung von Werkstücken / Werkzeugen verwendet. Über die Abzweigung 38' gelangt ein geringer Prozentsatz der Luft zur Feinfilterung.

Zusätzlich sind bei der Absaugvorrichtung gemäß Figur 2 auch Absperrplatten beziehungsweise Weichen 39 vorgesehen, mit denen die jeweiligen Kanäle 30, 31 und 32 jeweils einzeln geschlossen werden können. Je nach Art der Bearbeitung können also beispielsweise die Kanäle 31 und 32 abgesperrt werden, sodass eine Vorrichtung ähnlich der aus Figur 1 bekannten Vorrichtung vorliegt. Somit können aber auch einzelne Vorseparatoren "deaktiviert" werden, weil deren Zugang versperrt wird. Ist zum Beispiel nur der Kanal 30 geöffnet, so liegt demzufolge eine Vorrichtung ähnlich der aus Figur 1 vor.

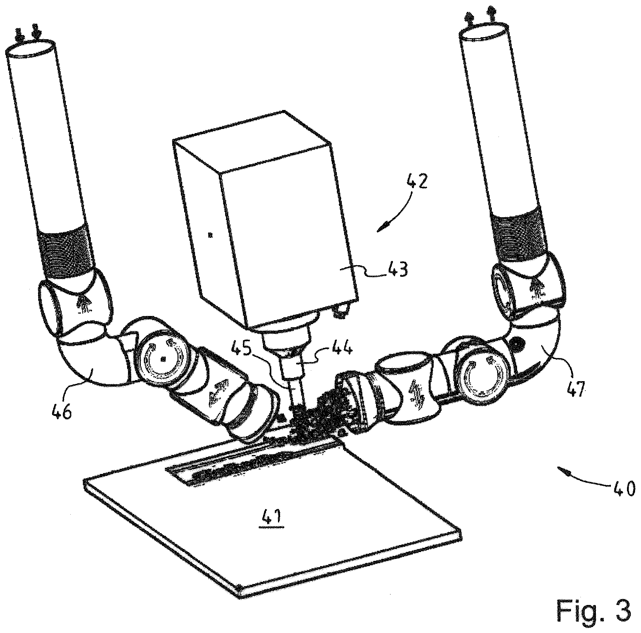

Figur 3 zeigt einen Bearbeitungsbereich 40, in dem ein Werkstück 41 von einer Werkzeugmaschine 42, nämlich einer Fräsmaschine 42 bearbeitet wird. Der Fräser besteht aus einem Spindelgehäuse 43, einem Futter 44 und einem Fräser 45. Des Weiteren existiert ein Zuführkanal zur direkten Anstrahlung des Bearbeitungsbereichs, nämlich des Kanals 46. Dieser Kanal 46 verfügt über mehrere Gelenke und kann somit fasst beliebig eingestellt werden. Einen ähnlichen Aufbau weist der Abführkanal 47 auf. Beide sind mit ihren jeweiligen Öffnungen in der Nähe des Fräsers 45 platziert und können somit direkt für einen entsprechenden Materialabtransport sorgen. Denkbar ist auch die Verwendung einer Absaughaube, die direkt über dem entsprechenden Werkzeug angebracht wird.

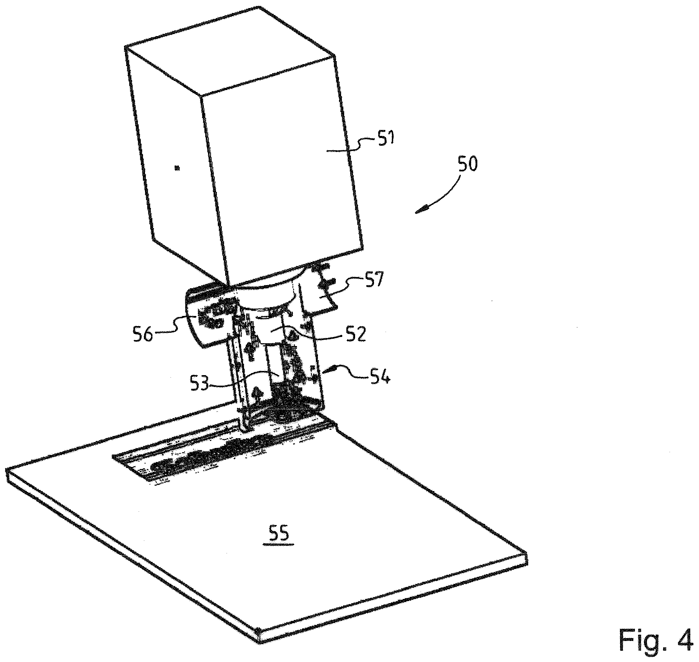

In Figur 4 ist ebenfalls die Werkzeugmaschine 50 mit dem Spindelgehäuse 51, dem Futter 52 und dem Fräser 53 dargestellt. Um das Futter 52 und den Fräser 53 ist eine Haube 54 angeordnet. Die Haube 54 besteht regelmäßig aus Kunststoff und besitzt einen Anschluss an den Zuführkanal 57 und den Abluftkanal 56, wobei die Anstrahlung durch den Zuführkanal 57 erfolgt. Partikel, die vom Bearbeitungsvorgang stammen, werden über den Absaugkanal ansaugt und weitertransportiert. Der Fräser 53 bearbeitet das Werkstück 55. Die bei der Bearbeitung entstehenden Partikel bleiben bei dieser Anordnung größtenteils innerhalb der Fräshaube 54. Eine derartige Fräshaube54 bietet somit einen sehr guten Schutz, damit die entsprechenden Partikel nicht nach außen gelangen können. Gerade dann jedoch, wenn verschiedene Werkzeuge aus einem Werkzeugspeicher eingesetzt werden und ein rascher Wechsel mittels eines Werkzeugwechslers erfolgen soll, kann die Haube deswegen genommen entfernt beziehungsweise ausgetauscht werden.

Eine werkzeugnahe Absaugung hat sich grundsätzlich vor allem in der CFK-Bearbeitung von Plattenwerkstoffen durchgesetzt (CFK: Abkürzung für kohlenstofffaserverstärkter Kunststoff).

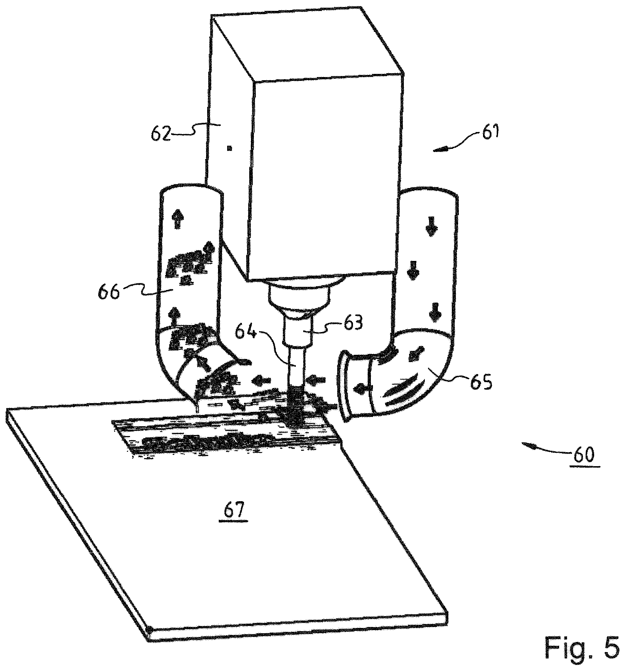

Figur 5 wiederum zeigt einen Bearbeitungsbereich 60 mit einer Werkzeugmaschine 61, bestehend aus einem Spindelgehäuse 62, einem Futter 63 und einem Fräser 64. Zu beiden Seiten des Fräsers 64 sind entsprechend ein Zuführkanal 65 und ein Absaugkanal 66 angeordnet. Diese Kanäle 65 können auf den Fräser 64 hin ausgerichtet werden, verfügen aber nicht über einzelne Gelenke. Der Fräser bearbeitet sodann das Werkstück 67.

Allen Ausführungsbeispielen der Erfindung ist gemeinsam, dass ein Zuführkanal zur Zuführung von Luft in den Bearbeitungsbereich vorgesehen ist und der Absaugkanal und der Zuführkanal miteinander gekoppelt sind, sodass wenigstens ein Teil der über den Absaugkanal abgesaugten Luft in den Zuführkanal zur Rückführung der Luft in den Bearbeitungsbereich geleitet wird. Der Zuführkanal dient insbesondere dazu, das Werkstück beziehungsweise Werkzeug unmittelbar anzustrahlen. Diese Maßnahme ermöglicht eine deutliche Energieeinsparung und eine bessere Erfassung/Beseitigung der Späne/Stäube.

### Bezugszeichenliste:

- 1: Absaugvorrichtung
- 2: Werkzeugmaschine
- 3: Spindelgehäuse
- 4: Futter
- 5: Fräser/Werkzeug
- 6: Werkstücktisch
- 7: Werkstück
- 8: Partikel
- 9: Absaugkanal
- 10: Strömungsrichtung
- 11: Vorseparator
- 12: Trichter
- 13: Behälter
- 14: Kanal zur Weiterleitung
- 15: Abzweigkanal
- 16: Rückführungskanal
- 17: Zuführkanal
- 18: Umgebungsluft aus Bearbeitungsbereich

- 20: Absaugvorrichtung
- 21: Werkzeugmaschine
- 22: Gehäusespindel
- 23: Futter
- 24: Fräser
- 25: Werkstücktisch
- 26: Werkstück
- 27: Absaugkanal
- 28: Zuführkanal
- 29: Partikel
- 30: Separationskanal
- 31: Separationskanal
- 32: Separationskanal
- 33: Vorseparator/Schwerkraftabscheider
- 34: Trichter
- 35: Behälter
- 36: Hindernis
- 37: Entstaubungsfilter
- 37': Filterstruktur
- 38: Rückführkanal
- 38': Abzweigung zur Feinfilterung
- 39: Weiche/Absperrung
- 40: Absaugvorrichtung
- 41: Werkstück
- 42: Werkzeugmaschine
- 43: Spindelgehäuse
- 44: Futter
- 45: Fräser
- 46: Zuführkanal
- 47: Absaugkanal

- 50: Bearbeitungsbereich
- 51: Gewindespindel
- 52: Futter
- 53: Fräser
- 54: Absaughaube
- 55: Werkstück
- 56: Absaugkanal
- 57: Zuführkanal

- 60: Bearbeitungsbereich
- 61: Werkzeugmaschine
- 62: Gehäuse für die Gewindespindel
- 63: Futter
- 64: Fräser
- 65: Zuführkanal
- 66: Absaugkanal
- 67: Werkstück

## Patentansprüche

1. Absaugvorrichtung (1, 20, 40) zur Absaugung von Partikeln (8, 29) wie Spänen und/oder Stäuben aus dem Bearbeitungsbereich bei der Zerspanung von Holz-, Faser- oder Verbundwerkstoffen oder Kunststoffen und/oder bei der Trockenbearbeitung von metallischen Werkstoffen mit einem Absaugkanal (9, 27, 47, 56, 66) zur Abführung von Luft zusammen mit den abzusaugenden Spänen und/oder Stäuben aus dem Bearbeitungsbereich, wobei ein Zuführkanal (17, 28, 46, 57, 65) zur Zuführung von Luft in den Bearbeitungsbereich vorgesehen ist und der Absaugkanal und der Zuführkanal miteinander gekoppelt sind, sodass wenigstens ein Teil der über den Absaugkanal abgesaugten Luft in den Zuführkanal zur Rückführung der Luft in den Bearbeitungsbereich geleitet wird und der Zuführkanal dazu ausgebildet ist, ein Werkzeug (5, 24, 45, 53, 64) und/oder Werkstück (7, 26, 41, 55, 67) im Bearbeitungsbereich (50) unmittelbar anzustrahlen, **dadurch gekennzeichnet, dass**
**ein Vorseparator (11, 33, 36, 37) zur Filterung, insbesondere zur Grobfilterung, der über den Absaugkanal (9, 27, 47, 56, 66) abgesaugten Luft vorgesehen ist,**
**wobei ein Abzweigkanal (15, 38') mit einer Feinfiltervorrichtung zur Feinfilterung vorgesehen ist, um wenigstens einen Anteil der Luft in die Feinfiltervorrichtung zu leiten,**
**und wobei der Abzweigkanal (15, 38') dem Vorseparator nachgeschaltet ist,**
**um die Differenz zwischen der zum Anstrahlen verwendeten Luft und der abgesaugten Luft herzustellen und einen Teil der verunreinigten Prozessluft fein gefiltert an die Umwelt abzugeben.**

2. Absaugvorrichtung (1, 20, 40) **nach Anspruch 1, dadurch gekennzeichnet, dass** der Vorseparator (11, 33, 36, 37) einen Fliehkraftabscheider und/oder einen Schwerkraftabscheider und/oder einen Entstauber umfasst.

3. Absaugvorrichtung (1, 20, 40) nach einem der vorgenannten Ansprüche, **dadurch gekennzeichnet, dass** der Absaugkanal (27) eine Verzweigung umfasst, die in wenigstens zwei parallel geschaltete Separationskanäle abzweigt, wobei wenigstens einer der Separationskanäle (30, 31, 32) wenigstens einen Vorseparator (11, 33, 36, 37) zur Grobfilterung der über den Absaugkanal abgesaugten Luft umfasst.

4. Absaugvorrichtung (1, 20, 40) **nach Anspruch 3, dadurch gekennzeichnet, dass** die Separationskanäle (30, 31, 32) untereinander jeweils verschiedene Vorseparatoren (33, 36, 37) zur Filterung verschiedener Partikelgrößen umfassen.

5. Absaugvorrichtung (1, 20, 40) **nach Anspruch 3 oder 4, dadurch gekennzeichnet, dass** eine Weiche (39) zur Umschaltung zwischen den Separationskanälen vorgesehen ist.

6. Absaugvorrichtung (1, 20, 40) nach einem der vorgenannten Ansprüche, **dadurch gekennzeichnet, dass** der Absaugkanal eine Absaughaube (54) umfasst.

7. Absaugvorrichtung (1, 20, 40) nach einem der vorgenannten Ansprüche, **dadurch gekennzeichnet, dass** der Zuführkanal in der Absaughaube (54) integriert ist.

8. Absaugvorrichtung (1, 20, 40) nach einem der vorgenannten Ansprüche, **dadurch gekennzeichnet, dass** der Absaugkanal (9, 27, 47, 56, 66)in einen Absaugstutzen und der Zuführkanal (17, 28, 46, 57, 65) in einen Zuluftstutzen integriert ist, wobei insbesondere der Absaugstutzen und/oder der Zuluftstutzen flexibel positionierbar ausgebildet sind.

9. Absaugvorrichtung (1, 20, 40) nach einem der vorgenannten Ansprüche, **dadurch gekennzeichnet, dass** eine Strömungsvorrichtung zur Erzeugung des Luftstroms vorgesehen ist, insbesondere zur Erzeugung von Druckluft.

10. Werkzeugmaschine (2, 21, 61) zur Bearbeitung eines Werkstücks mit einem Bearbeitungsbereich (50) zur Lagerung und/oder Bearbeitung des Werkstücks (7, 26, 41, 55, 67), **dadurch gekennzeichnet, dass** eine Absaugvorrichtung (1, 20, 40) nach einem der vorgenannten Ansprüche vorhanden ist.

11. Werkzeugmaschine (2, 21, 61) **nach Anspruch 10, dadurch gekennzeichnet, dass** ein Werkzeug zur Bearbeitung des Werkstücks vorgesehen ist und der Absaugkanal intern in das Werkzeug integriert ist.

12. Werkzeugmaschine **nach einem der Ansprüche 10 oder 11, dadurch gekennzeichnet, dass** eine Absaughaube (54) so angeordnet ist, dass sie das Werkzeug wenigstens teilweise umgibt.

## Claims

1. An exhaust device (1, 20, 40) for the exhausting of particles (8, 29) such as chips and/or dust from the processing area in the machining of wood, fibre or composite materials or plastics and/or in the dry processing of metal materials with an exhaust channel (9, 27, 47, 56, 66) for the removal of air together with the exhausted chips and/or dust from the processing area, wherein a supply channel (17, 28, 46, 57, 65) is provided for supplying air into the processing area, and the exhaust channel and the supply channel are coupled together so that at least a portion of the air exhausted in the exhaust channel is guided into the supply channel for the recirculation of the air into the processing area, and the supply channel is designed so as to directly radiate a tool (5, 24, 45, 53, 64) and/or workpiece (7, 26, 41, 55, 67) in the processing area (50), **characterised in that**
**a pre-separator (11, 33, 36, 37) is provided for the filtering, particularly for the coarse filtering, of the air exhausted via the exhaust channel (9, 27, 47, 56, 66),**
**wherein a branch channel (15, 38') with a fine filtering device for fine filtering is provided to guide at least one portion of the air into the fine filtering device,**
**and wherein the branch channel (15, 38') is downstream of the pre-separator,**
**to produce the differential between the air used for radiating and the exhausted air, and to release a portion of the finely filtered contaminated process air to the environment.**

2. The exhaust device (1, 20, 40) according to claim 1, **characterised in that** the pre-separator (11, 33, 36, 37) comprises a cyclone separator and/or a gravity separator and/or a dust collector.

3. The exhaust device (1, 20, 40) according to one of the preceding claims, **characterised in that** the exhaust channel (27) comprises a branching that branches off into at least two separation channels connected in parallel, wherein at least one of the separation channels (30, 31, 32) comprises at least one pre-separator (11, 33, 36, 37) for the coarse filtering of exhausted air via the exhaust channel.

4. The exhaust device (1, 20, 40) **according to claim 3, characterised in that** the separation channels (30, 31, 32) comprise pre-separators (33, 36, 37) respectively different from each other for the filtering of different particle sizes.

5. The exhaust device (1, 20, 40) **according to claim 3 or claim 4**, **characterised in that** a switch (39) is provided for the switching between the separation channels.

6. The exhaust device (1, 20, 40) according to one of the preceding claims, **characterised in that** the exhaust channel comprises an exhaust hood (54).

7. The exhaust device (1, 20, 40) according to one of the preceding claims, **characterised in that** the supply channel is integrated into the exhaust hood (54).

8. The exhaust device (1, 20, 40) according to one of the preceding claims, **characterised in that** the exhaust channel (9, 27, 47, 56, 66) is integrated into an exhaust outlet and the supply channel (17, 28, 46, 57, 65) is integrated into an air inlet, wherein in particular the exhaust outlet and/or the air inlet are formed to be flexibly positionable.

9. The exhaust device (1, 20, 40) according to one of the preceding claims, **characterised in that** a flow device for the creation of the air flow is provided, in particular for the creation of pressurized air.

10. A machine tool (2, 21, 61) for the processing of a workpiece with a processing area (50) for the storage and/or processing of the workpiece (7, 26, 41, 55, 67), **characterised in that** an exhaust device (1, 20, 40) according to one of the preceding claims is available.

11. The machine tool (2, 21, 61) **according to claim 10**, **characterised in that** a tool is provided for the processing of the workpiece, and the exhaust channel is integrated internally in the tool.

12. The machine tool **according to one of claim 10 or claim 11, characterised in that** the exhaust hood (54) is arranged such that it at least partially encompasses the tool.

## Revendications

1. Dispositif d'aspiration (1, 20, 40) servant à aspirer des particules (8, 29) telles que des copeaux et/ou des poussières de la zone d'usinage pendant l'usinage par enlèvement de copeaux de bois, de matières fibreuses ou de matières composites ou matières synthétiques et/ou pendant l'usinage à sec de matières métalliques, comprenant un conduit d'aspiration (9, 27, 47, 56, 66) servant à évacuer l'air conjointement avec les copeaux et/ou poussières à aspirer de la zone d'usinage, dans lequel un conduit d'alimentation (17, 28, 46, 57, 65) servant à amener de l'air dans la zone d'usinage est prévu et le conduit d'aspiration et le conduit d'alimentation sont accouplés l'un à l'autre, de sorte qu'au moins une partie de l'air aspiré par le biais du conduit d'aspiration soit guidée dans le conduit d'alimentation de manière à ramener l'air dans la zone d'usinage et le conduit d'alimentation étant conçu pour effectuer une projection directement sur un outil (5, 24, 45, 53, 64) et/ou une pièce à usiner (7, 26, 41, 55, 67) directement dans la zone d'usinage (50), **caractérisé en ce que**
**un pré-séparateur (11, 33, 36, 37) est prévu, servant à filtrer, en particulier à filtrer grossièrement, l'air aspiré par le biais du conduit d'aspiration (9, 27, 47, 56, 66),**
**dans lequel un conduit de dérivation (15, 38') est prévu, comprenant un dispositif de filtrage fin servant au filtrage fin, afin de guider au moins une partie de l'air dans le dispositif de filtrage fin**
**et dans lequel le conduit de dérivation (15, 38') est disposé en aval du pré-séparateur,**
**afin de produire la différence entre l'air utilisé pour la projection et l'air aspiré et de dégager une partie de l'air de processus contaminé ayant subi un filtrage fin vers l'environnement**.

2. Dispositif d'aspiration (1, 20, 40) **selon la revendication 1**, **caractérisé en ce que** le pré-séparateur (11, 33, 36, 37) comprend un séparateur à cyclone et/ou un séparateur par gravité et/ou un dépoussiéreur.

3. Dispositif d'aspiration (1, 20, 40) selon une des revendications précédentes, **caractérisé en ce que** le conduit d'aspiration (27) comprend une ramification, qui se ramifie dans au moins deux conduits de séparations connectés en parallèle, dans lequel au moins un des conduits de séparation (30, 31, 32) comprend au moins un pré-séparateur (11, 33, 36, 37) pour le filtrage grossier de l'air aspiré par le biais du conduit d'aspiration.

4. Dispositif d'aspiration (1, 20, 40) **selon la revendication 3, caractérisé en ce que** les conduits de séparation (30, 31, 32) comprennent entre eux respectivement différents pré-séparateurs (33, 36, 37) servant au filtrage de différentes tailles de particules.

5. Dispositif d'aspiration (1, 20, 40) **selon la revendication 3 ou 4, caractérisé en ce qu'**un aiguillage (39) est prévu pour la commutation entre les conduits de séparation.

6. Dispositif d'aspiration (1, 20, 40) selon une des revendications précédentes, **caractérisé en ce que** le conduit d'aspiration comprend une hotte d'aspiration (54).

7. Dispositif d'aspiration (1, 20, 40) selon une des revendications précédentes, **caractérisé en ce que** le conduit d'alimentation est intégré dans la hotte d'aspiration (54).

8. Dispositif d'aspiration (1, 20, 40) selon une des revendications précédente, **caractérisé en ce que** le conduit d'aspiration (9, 27, 47, 56, 66) est intégré dans un raccord d'aspiration et le conduit d'alimentation (17, 28, 46, 57, 65) est intégré dans un raccord d'alimentation, dans lequel, en particulier, le raccord d'aspiration et/ou le raccord d'alimentation sont formés pour pouvoir être positionnés de manière flexible.

9. Dispositif d'aspiration (1, 20, 40) selon une des revendications précédentes, **caractérisé en ce qu'**un dispositif d'écoulement est prévu, servant à la production du courant d'air, en particulier la production d'air comprimé.

10. Machine-outil (2, 21, 61) pour l'usinage d'une pièce à usiner, comprenant une zone d'usinage (50) pour le stockage et/ou l'usinage de la pièce à usiner (7, 26, 41, 55, 67), **caractérisée en ce qu'**il est prévu un dispositif d'aspiration (1, 20, 40) selon une des revendications précédentes.

11. Machine-outil (2, 21, 61) **selon la revendication 10**, **caractérisée en ce qu'**un outil est prévu pour l'usinage de la pièce à usiner et **en ce que** le conduit d'aspiration est intégré intérieurement dans l'outil.

12. Machine-outil **selon une des revendications 10 ou 11, caractérisée en ce qu'**une hotte d'aspiration (54) est disposée de manière à entourer au moins partiellement l'outil.
